# EUROPEAN PATENT SPECIFICATION

(11) **EP 3 672 852 B1**
(45) Date of publication and mention of the grant of the patent: **04.01.2023**
(21) Application number: 18882453.6
(22) Date of filing: 29.11.2018
(51) Int. Cl.: B60T 11/00, B60T 11/236, B60T 13/14, F16J 1/00, F16D 65/28

(54) **BRAKE MASTER CYLINDER WITH CURVED LANDS**
HAUPTBREMSZYLINDER MIT GEKRÜMMTEN FLÄCHEN
MAÎTRE-CYLINDRE DE FREIN AVEC ZONES INCURVÉES

(30) Priority: 01.12.2017 US 201715829462
(43) Date of publication of application: 01.07.2020
(73) Proprietor: HB Performance Systems, Inc., Mequon, WI 53092 (US)
(72) Inventor: OSTERBERG, Timothy, Mequon WI 53092 (US); HOLLAND, Randall, Mequon WI 53092 (US)
(74) Representative: Forresters IP LLP
(86) International application number: PCT/US2018/063161
(87) International publication number: WO 2019/108852

(56) References cited:
- GB-A- 1 603 849
- JP-A- H0 914 440
- US-A- 4 106 463
- US-A1- 2009 288 412
- US-A1- 2012 085 090
- US-A1- 2013 068 095
- US-A1- 2015 143 991

## Description

### BACKGROUND

The present invention relates generally to hydraulic brake systems and specifically to pistons of master cylinders for such systems.

Hydraulic brake systems are commonly used on vehicles (e.g., automobiles, snowmobiles, ATVs, motorcycles) to provide a braking function. Such systems typically include a master cylinder designed to be moved by the user (e.g., by a foot pedal or hand lever) to pressurize hydraulic fluid and impart motion to brake pads. Master cylinders commonly include a housing defining a bore, and a piston movable in the bore.

The piston has an outer diameter slightly smaller than the inner diameter of the bore so that the piston can reciprocate within the bore. One or more resilient seals are mounted on the piston to seal the gap between the piston and the bore. The sidewalls of the piston adjacent the seal(s) are called the "lands."

In some situations, contact can occur between the lands and the bore. Lubrication at this contact point substantially reduces frictional forces in this situation, but it can be appreciated that further reducing resistance between the piston and bore is desired.

US 2009/288412 A1 discloses a master cylinder (1) with reduced free travel (23). The disclosed master cylinder reduces free travel with the aid of a frustoconical portion (24) in the piston, an orifice (14) for communication of hydraulic fluid being situated on said inclined wall, a gap (26) between the inclined wall and an inner wall (12) of the bore allowing a passage for hydraulic fluid capable of filling a pressure chamber (4). However, such inclined walls create a change in the slope of an outer wall (29) of the piston, this change being able to cause a separation of an inner lip (19) of a sealing cup (17). To prevent this separation, the invention provides that the inclined wall forms a convex rounded surface (32).

US 2012/085090 A1 discloses a hydraulic master cylinder body having a bore defined at least in part by a bore wall, wherein the bore wall includes an opening for hydraulic fluid to be passed into the bore, and a piston assembly situated at least substantially in the bore, the assembly having a piston with a piston body and at least one cup seal situated substantially around the piston body, the cup seal situated adjacent to the bore wall so as to be in sealing engagement therewith, and a back-up ring that is situated about the piston body, wherein the back-up ring is positioned to at least partially cover a portion of the cup seal that is adjacent to the bore wall and to prevent at least a portion of the cup seal from contacting the bore wall and the opening for hydraulic fluid during piston actuation.

GB 1 603 849 A discloses a piston and cylinder assembly comprising a piston disposed within a bore, the piston having a wider portion and a narrower portion. The wider portion has a diameter slightly smaller than the diameter of the bore, and has edges with a curved chamfer to reduce damage to the bore during reciprocating movement of the piston in the bore. A sealing element is positioned at the narrower portion of the piston to create a seal between the piston and bore, and a bearing element is positioned on the narrower portion of the piston, adjacent to and between the sealing element and the wider portion. The bearing element prevents the sealing element from entering the space between the curved chamfer and the bore, reducing wear on the sealing element.

JP H09 14440 A discloses a liquid operated master cylinder for the rear wheel disk brake of a motorcycle having a cylinder hole 7 arranged so as to open the bottom end thereof, and a fluid tight piston 8 disposed in the cylinder hole and movable through a cup seal 10. The cup seal 10 and a retainer 11 are arranged on the top end surface 8d of the piston 8 in which a liquid operated chamber 9 is formed between the cylinder hole 7 upper wall and the piston 8, and a reset spring 12 is contractedly arranged between the retainer 11 and the cylinder hole 7 upper wall. In the diameter of the piston 8, an upper flange 8b is formed slightly smaller than that of a main body part 8a, and also the outer circumferential rim of the upper end surface 8d of the upper flange 8b is formed in a circular arc shape of a beveling radial diameter R 0.6mm to 1.2m.

### SUMMARY

The invention is as defined in claim 1.

The present invention provides a brake master cylinder comprising a housing having an inner surface defining a bore (e.g., a substantially cylindrical bore), and a piston positioned in the bore and movable relative to the bore along a piston axis. The piston includes two spaced apart lands defining the radially outermost surfaces capable of contacting the inner surface. The lands are longitudinally curved at the radially outermost surface. For example, the radially outermost surface can be curved at a radius of less than 2.54cm (1 inch) (e.g., between 0.381cm [0.15 inches] and 1.905cm [0.75 inches]) and preferably less than 1.27 cm (0.5 inches).

According to the invention, the longitudinally curved lands include two edges that define an axial width of the lands. The two edges have a radius of less than 0.508cm (0.2 inches), and preferably about 0.254cm (0.1 inches). The relative positions of the edges and lands are such that neither of the two edges is capable of contacting the inner surface of the bore during reciprocating movement of the piston in the bore.

Other aspects of the invention will become apparent by consideration of the detailed description and accompanying drawings.

### BRIEF DESCRIPTION OF THE DRAWINGS

FIG. 1 illustrates an ATV with a brake master cylinder assembly embodying the present invention.
FIG. 2 is a perspective view of the master cylinder assembly of FIG. 1.
FIG. 3 is an exploded view of the master cylinder assembly of FIG. 2.
FIG. 4 is a section view taken along line 4-4 in FIG. 2.
FIG. 5 is an enlargement of a portion of the section view of FIG. 4.
FIG. 6 is an enlargement of another portion of the section view of FIG. 4.
FIG. 7 illustrates a piston member embodying the present invention is an askewed position relative to a bore.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. The invention is only limited within the scope of the appended claims.

### DETAILED DESCRIPTION

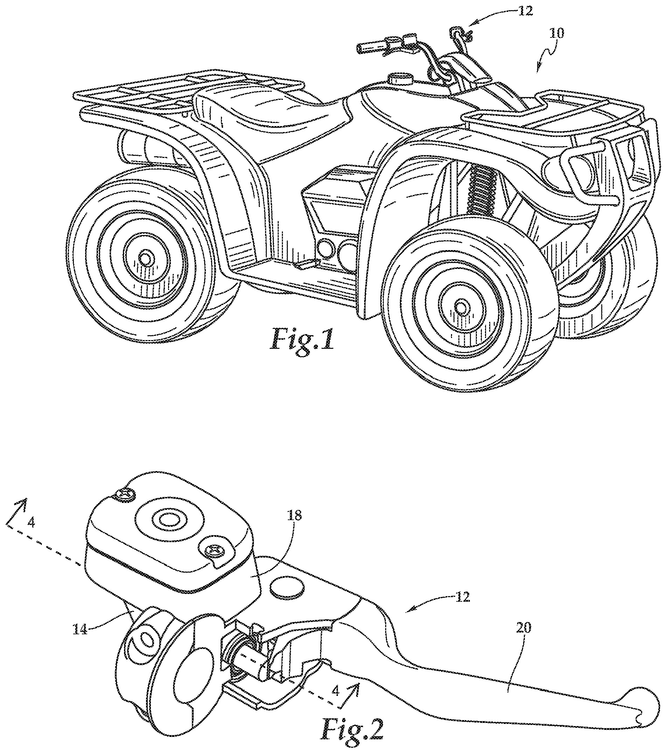

FIG. 1 illustrates an ATV 10 having a master cylinder assembly 12 embodying the present invention. The illustrated master cylinder assembly 12 is used in connection with a braking system to actuate the vehicle brakes. However, it should be understood that the features of the present invention are also applicable to a master cylinder assembly used in connection with other actuating systems, such as transmission clutches.

Referring to FIGS. 2-3, the illustrated master cylinder assembly 12 includes a cylinder housing 14 defining a bore 16, a fluid reservoir 18 that supplies fluid to the bore 16, and a lever 20 pivotally attached to the housing 14. The lever 20 is positioned to actuate a piston assembly 22 along a piston axis 24 in the bore 16. The illustrated bore 16 has a diameter D of about 1.75cm (11/16 inch).

The piston assembly 22 includes a piston member 26, a piston O-ring 28 mounted on the piston member 26, a piston wiper 30 mounted on the piston member 26, and an end cap 32 removably mounted on one end of the piston member 26. A compression spring 34 and spring retainer 36 are position between the piston member 26 and the bottom of the bore 16 to bias the piston member 26 is a direction out of the bore 16 (i.e., to the right in FIGS. 2-3).

The piston member 26 includes front and rear lands 40,42, which are the radially outermost surfaces of the piston member 26 and position the piston member 26 in the bore 16. The lands 40,42 are spaced along the piston axis 24 to provide contact points between the piston member 26 and the sidewalls defining the bore 16. In the illustrated embodiment, each land 40,42 is an annular member that protrudes radially and has a diameter slightly smaller than the diameter of the bore 16 to provide a stable sliding interface between the piston member 26 and the sidewalls defining the bore to facilitate smooth reciprocating motion of the piston assembly 22 in the bore 16. The illustrated front land 40 has a width W1 of about 0.2032cm (0.080 inches), and the illustrated rear land 42 has a width W2 of 0.3175cm (0.125 inches). The illustrated lands 40,42 are spaced from each other by a length L of about 1.905cm (0.75 inches).

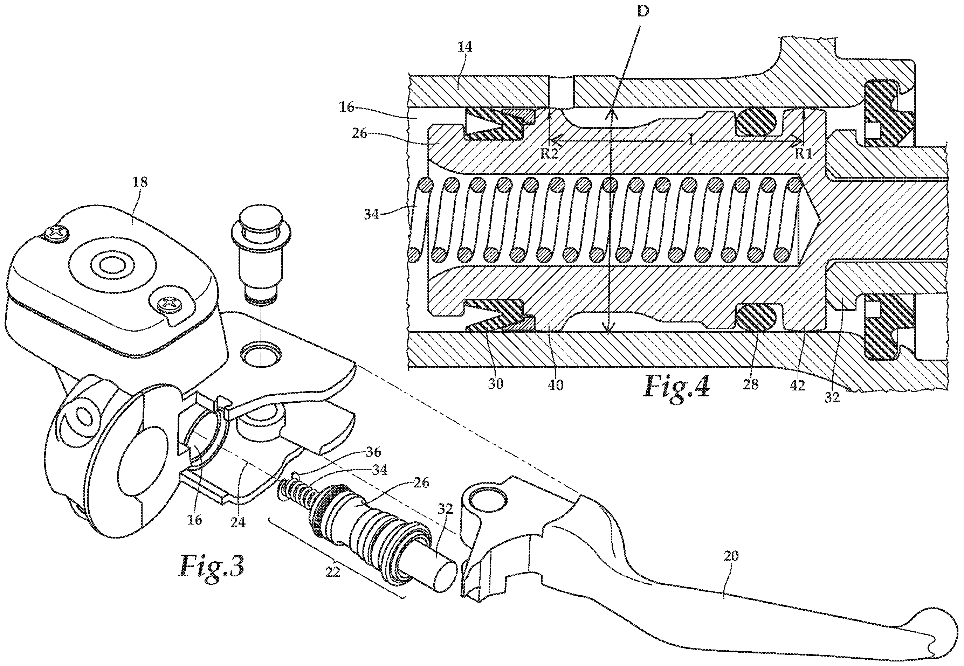

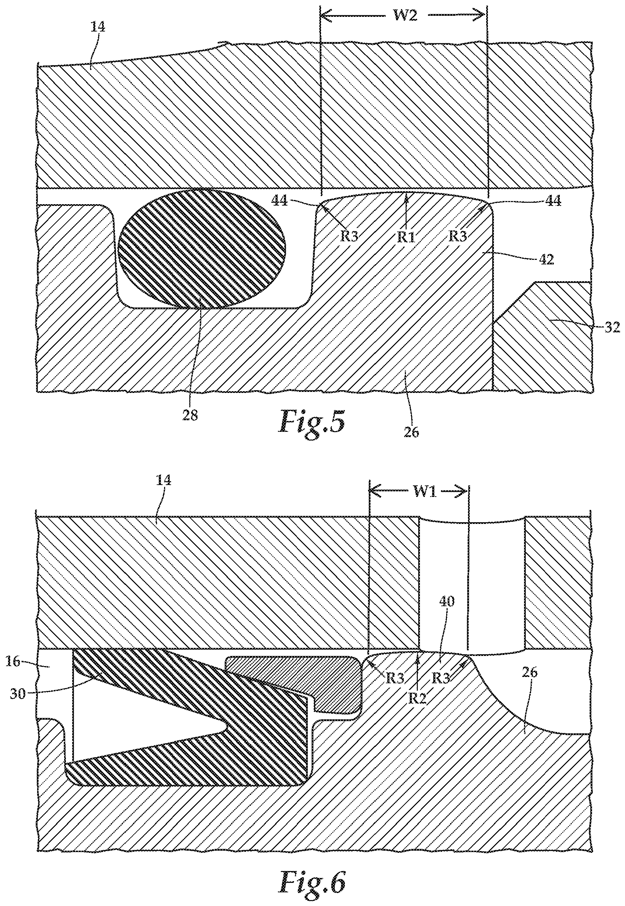

Referring to FIGS. 4-6, the longitudinal cross-section view of the piston shows that each of the lands 40,42 is longitudinally convexly curved. That is, in addition to being convexly curved in the circumferential direction to define the annular shape, each of the illustrated lands 40,42 is convexly curved longitudinally to create a partial torus shape. The partial torus shape provides a large-diameter, curved surface for contacting the inner surface of the bore 16. In the illustrated embodiment, the longitudinal curve of the front land 40 has a radius R2 of 0.635cm (0.25 inches) and the longitudinal curve of the rear land 42 has a radius R1 of 1.016cm (0.40 inches).

Based on the above dimensions, it can be seen that the lands each have a radius R1,R2 that is roughly proportional to the width W1,W1 of the corresponding land. Specifically, the illustrated radii R1,R2 are chosen to be about 2-5 times (and preferably 2.5-4 times) the corresponding width W1,W2. In the illustrated embodiment, the radii R1,R2 are about 3.1-3.3 times the corresponding width W1,W2.

This 3.1-3.3 multiplier is related to the length L between the lands. As the length L between the lands increases, the size of the radius on each land can also increase (i.e., the multiplier can increase), all other factors remaining the same. Preferably, the ratio of the multiplier (R/W) to the length L is 3.0 to 5.5, and more preferably 4.0 to 4.5. In the current embodiment, the lands are spaced by a length L of 1.905cm (0.75 inches), and the ratio of the multiplier (R/W) to the length L is about 4.3.

Each illustrated land 40,42 is defined between two edges 44 that define an axial length of each land. The illustrated edges 44 have radii that are smaller than the radii of the longitudinal curve of the corresponding land. In the illustrated embodiment, each of the edges 44 has a radius R3 of about 0.0254cm (0.010 inches). It is noted that, because of the longitudinal curvature of the lands 40,42, the corresponding edges 44 are spaced from and do not contact the inner surface of the bore 16.

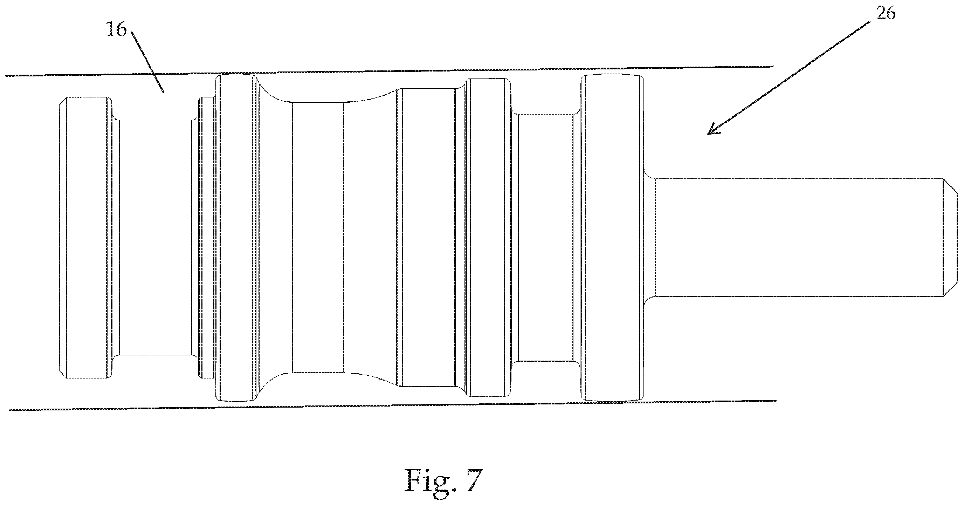

Referring to FIG. 7, by virtue of the illustrated arrangement, the contact between the piston member 26 and the sidewall defining the bore 16 occurs at the large-radii, curved lands 40,42 instead of the small radii, curved edges 44. This is true even when the piston member 26 is askew in the bore 16, as represented schematically in FIG. 7. This increases the effective surface area of the contact and prevents the edges from digging into the inner surface of the bore 16. With pistons that have flat lands and edges with small radii, the edges can come into contact with the bore when the piston member is askew, potentially resulting in increased frictional or resistance to sliding of the piston member 26 in the bore 16.

Various features and advantages of the invention are set forth in the following claims.

## Claims

1. A brake master cylinder (12) comprising:
a housing (14) having an inner surface defining a bore (16) having an inner bore diameter (D); and
a piston (26) positioned in the bore (16) and movable relative to the bore (16) along a piston axis (24), the piston (26) having two spaced apart lands (40, 42) defining the radially outermost surfaces of the piston (26) capable of contacting the inner surface, each of the lands (40, 42) having a diameter that is slightly smaller than the inner bore diameter (D), and **characterized in that**
the lands (40, 42) are longitudinally curved at their radially outermost surfaces, and have two edges (44) that define an axial width of the land (40, 42), wherein the relative positions of the edges (44) and lands (40, 42) are such that neither of the two edges (44) is capable of contacting the inner surface of the bore (16) during reciprocating movement of the piston in the bore (16).

2. A brake master cylinder (12) as claimed in claim 1, wherein the two spaced apart lands (40, 42) are annular members that are longitudinally curved at a radius, and wherein the radius is larger than the width by a multiplier of 2.0 to 5.0.

3. A brake master cylinder (12) as claimed in claim 2, wherein the lands (40, 42) comprise a radially outermost surface that is longitudinally curved at a radius of less than 2.54 cm (1 inch).

4. A brake master cylinder (12) as claimed in claim 2, wherein the radius is less than 1.27 cm (0.5 inches), or wherein the radius is between 0.381 cm and 1.905 cm (0.15 inch and 0.75 inch).

5. A brake master cylinder (12) as claimed in claim 2, wherein the two edges (44) have a radius of less than 0.508 cm (0.2 inches).

6. A brake master cylinder (12) as claimed in claim 2, wherein the multiplier is 3.1 to 3.3.

7. A brake master cylinder (12) as claimed in claim 1, wherein the two lands (40, 42) are convexly curved longitudinally to create a partial torus shape.

## Patentansprüche

1. Hauptbremszylinder (12), umfassend:
ein Gehäuse (14) mit einer Innenoberfläche, die ein Loch (16) mit einem Lochinnendurchmesser (D) definiert, und
einen Kolben (26), der in der dem Loch (16) positioniert und im Verhältnis zu dem Loch (16) entlang einer Kolbenachse (24) beweglich ist, wobei der Kolben (26) zwei beabstandete Stege (40, 42) aufweist, welche die radial äußersten Oberflächen des Kolbens (26) definieren, die in der Lage sind, in Berührung mit der Innenoberfläche zu stehen, wobei jeder der Stege (40, 42) einen Durchmesser aufweist, der etwas kleiner als der Lochinnendurchmesser (D) ist, und **dadurch gekennzeichnet, dass**
die Stege (40, 42) an ihren radial äußersten Oberflächen in Längsrichtung gekrümmt sind und zwei Ränder (44) aufweisen, die eine axiale Breite des Stegs (40, 42) definieren, wobei die relativen Positionen der Ränder (44) und der Stege (40, 42) derart sind, dass keiner der beiden Ränder (44) in der Lage ist, während einer Hin- und Her-Bewegung des Kolbens in dem Loch (16) mit der Innenoberfläche des Lochs (16) in Berührung zu stehen.

2. Hauptbremszylinder (12) nach Anspruch 1, wobei die zwei beabstandeten Stege (40, 42) ringförmige Elemente sind, die in einem Radius in Längsrichtung gekrümmt sind, und wobei der Radius um einen Faktor von 2,0 bis 5,0 größer als die Breite ist.

3. Hauptbremszylinder (12) nach Anspruch 2, wobei die Stege (40, 42) eine radial äußerste Oberfläche aufweisen, die in einem Radius von weniger als 2,54 cm (1 Inch) in Längsrichtung gekrümmt ist.

4. Hauptbremszylinder (12) nach Anspruch 2, wobei der Radius weniger als 1,27 cm (0,5 Inch) beträgt oder wobei der Radius zwischen 0,381 cm und 1,905 cm (0,15 und 0,75 Inch) beträgt.

5. Hauptbremszylinder (12) nach Anspruch 2, wobei die zwei Ränder (44) einen Radius von weniger als 0,508 cm (0,2 Inch) aufweisen.

6. Hauptbremszylinder (12) nach Anspruch 2, wobei der Faktor 3,1 bis 3,3 beträgt.

7. Hauptbremszylinder (12) nach Anspruch 1, wobei die zwei Stege (40, 42) konvex in Längsrichtung gekrümmt sind, um eine Torusteilform zu erzeugen.

## Revendications

1. Un maître-cylindre de frein (12) comprenant :
un boîtier (14) ayant une surface interne définissant un alésage (16) ayant un diamètre d'alésage interne (D) ; et
un piston (26) positionné dans l'alésage (16) et pouvant se déplacer par rapport à l'alésage (16) le long d'un axe de piston (24), le piston (26) ayant deux zones espacées (40, 42) définissant les surfaces radialement le plus à l'extérieur du piston (26) capable d'entrer en contact avec la surface interne, chacune des zones (40, 42) ayant un diamètre qui est légèrement plus petit que le diamètre d'alésage interne (D), et **caractérisé en ce que**
les zones (40, 42) sont incurvées longitudinalement à leurs surfaces les plus à l'extérieur radialement, et ont deux bords (44) qui définissent une largeur axiale de la zone (40, 42), dans lequel les positions relatives des bords (44) et des zones (40, 42) sont telles qu'aucun des deux bords (44) ne peut entrer en contact avec la surface interne de l'alésage (16) pendant un mouvement de va-et-vient du piston dans l'alésage (16).

2. Un maître-cylindre de frein (12) selon la revendication 1, dans lequel les deux zones espacées (40, 42) sont des éléments annulaires qui sont incurvés longitudinalement à un rayon, et dans lequel le rayon est plus grand que la largeur par un multiplicateur compris entre 2,0 et 5,0,

3. Un maître-cylindre de frein (12) selon la revendication 2, dans lequel les zones (40, 42) comprennent une surface la plus à l'extérieur radialement qui est incurvée longitudinalement à un rayon inférieur à 2,54 cm (1 pouce).

4. Un maître-cylindre de frein (12) selon la revendication 2, dans lequel le rayon est inférieur à 1,27 cm (0,5 pouce).

5. Un maître-cylindre de frein (12) selon la revendication 2, dans lequel les deux bords (44) ont un rayon inférieur à 0,508 cm (0,2 pouce).

6. Un maître-cylindre de frein (12) selon la revendication 2, dans lequel le multiplicateur est compris entre 3,1 et 3,3.

7. Un maître-cylindre de frein (12) selon la revendication 1, dans lequel les deux zones (40, 42) sont des zones incurvées longitudinalement de manière convexe pour créer une forme partiellement torique.
